# EUROPEAN PATENT SPECIFICATION

(11) **EP 1 748 196 B1**
(45) Date of publication and mention of the grant of the patent: **17.09.2008**
(21) Application number: 06012241.3
(22) Date of filing: 14.06.2006
(51) Int. Cl.: F16B 7/14, F16B 7/18

(54) **Locking system for telescopic tubes**
Verriegelungsvorrichtung für teleskopische Rohre
Dispositif de verrouillage de deux tubes téléscopiques

(30) Priority: 26.07.2005 IT MI20051441
(43) Date of publication of application: 31.01.2007
(73) Proprietor: Gipron Giuseppe Pronzati Srl, 20010 Vanzago MI (IT)
(72) Inventor: Pronzati, Lorenzo, 20100 Milano (IT)
(74) Representative: Petruzziello, Aldo

(56) References cited:
- DE-A1- 19 740 823
- FR-A- 2 342 624
- JP-A- 10 030 617
- US-B1- 6 302 614

## Description

The present invention refers to a tube locking system, particularly suitable for length adjustment and for locking of telescopic tubes, and likewise for joining tubes having the same diameter. Said locking system is particularly suitable to be applied to trekking, climbing and walking poles and likewise to sticks for orthopaedic and motor rehabilitation use.

As is known, among the people who practise mountain trekking widespread use is made of height adjustable, telescopic poles which are used to facilitate and to aid the user's step, even on rough and uneven routes. This type of telescopic pole has the advantage of occupying a little space in the most compact condition thereof, in which the inner tube is inserted completely inside the outside tube.

The telescopic pole comprises two tubes sliding telescopically one inside the other and a locking device that locks the two tubes in position, so as to adjust the length of the tube, according to the user's requirements.

Two types of tube locking systems are known to the art:
1) an internal locking system which comprises a tang integral with a tube and provided with a tapered portion which couples inside an expandable mandrel causing expansion thereof inside the other tube; and
2) an external locking system, which comprises a ferrule mounted rotatably on the outside of a tube, which grips the other tube with the use of a cam.

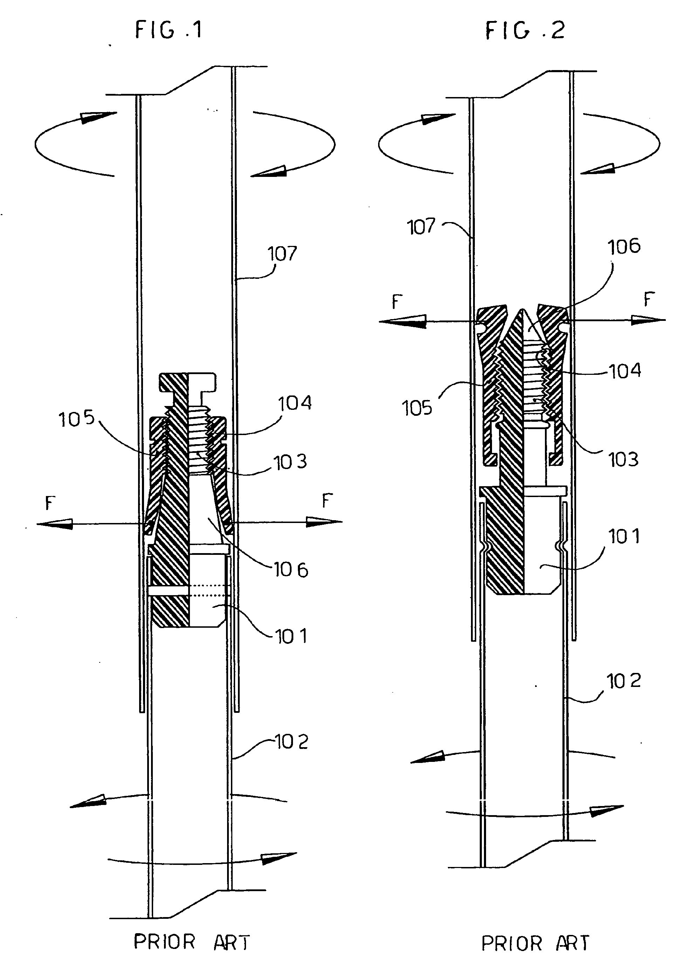

Two types of internal locking systems according to the prior art are illustrated in Figures 1 and 2. In both a tang 101 made integral with the end of a first tube 102 is provided.

The tang 101 has a cylindrical portion whereon is formed a cylindrical external thread 103 which screws into a cylindrical internal thread 104 formed inside an expandable mandrel 105.

The tang 101 has a tapered portion 106, which couples inside the mandrel 105. In Figure 1 the tapered portion 106 is a frusto-conical portion disposed in an intermediate position of the tang 101; in Figure 2, on the other hand, the tapered portion 106 is a conical portion disposed at the end of the tang 101.

In order to lock the first tube 102 inside a second tube 107, the mandrel 105 is disposed inside the second tube 107 and the first tube 102 rotates with respect to the second tube 107. As a result the thread of the tang 101 screws into the thread of the mandrel 105 and the tapered part 106 of the tang 101 advances inside the mandrel 105, forcing it to expand.

As shown, in the locking device of Figure 1 expansion of only the bottom part of the mandrel 105 is caused in the direction of the arrows F; on the other hand, in the locking device of Figure 2 expansion of only the top part of the mandrel 105 is caused in the direction of the arrows F.

This locking system presents various drawbacks.

In fact, the contact surface between the mandrel 105 and the tube 107 proves excessively small, with the result of an inefficient and insecure locking above all in the event of high axial stress on the pole. Furthermore, because of the high stress in a small contact surface between the mandrel and the tube, problems of deformation of the mandrel often occur, with consequent jamming during both locking and unlocking thereof.

It must further be considered that during screwing of the tang 101 into the mandrel 105 scraping of the tapered surface 106 of the tang inside the mandrel occurs, resulting in problems in advancement of the tang inside the mandrel.

JP 10030617 and FR 2 342 624 disclose a tube locking system comprising a tang made integral with one end of a first tube and an expansion mandrel mounted on said tang, able to expand inside a second tube so as to firmly lock the second tube thereon, where the tang and the expansion mandrel are coupled to each other in a threaded conical coupling relationship and the mandrel comprises at least two portions, separated from one another, disposed around the tang.

US 6 302 614 discloses a tube locking system like those disclosed by JP 10030617 or by FR 2 342 624, where the two portions of the mandrel are connected each other from one side.

Object of the present invention is to overcome the drawbacks of the prior art by providing a tube locking system that is efficient, reliable and at the same time practical, convenient and easy for the user.

Another object of the present invention is to provide such a tube locking system that is cheap and simple to produce.

These objects are achieved in accordance with the invention with the characteristics listed in appended independent claim 1.

Advantageous embodiments of the invention are apparent from the dependent claims.

The tube locking system, particularly for trekking, climbing and walking poles and for orthopaedic and motor rehabilitation sticks, according to the invention, comprises:
- a tang made integral with one end of a first tube, and
- an expansion mandrel mounted on said tang and able to expand inside a second tube so as to firmly lock the second tube thereon.

The tang and the expansion mandrel are coupled to each other in a conical threaded coupling relationship. In this manner the whole outside surface of the expansion mandrel can come into contact with the inside surface of the second tube, ensuring a more efficient and secure locking.

Further characteristics of the invention will be made clearer by the detailed description that follows, referring to a purely exemplary and therefore non limiting embodiment thereof, illustrated in the appended drawings, in which:
Figures 1 and 2 are two views partially in axial cross-section, illustrating two respective tube locking systems according to the prior art;
Figure 3 is a perspective view, illustrating the tube locking system according to the invention, exploded;
Figure 4 is an axial sectional view of the locking system of Figure 3 applied to two telescopic tubes, in the unlocked condition;
Figure 5 is a view like Fig. 4, wherein the locking system is in the locked condition;
Figures 6 and 7 are two views like Fig. 5, wherein the locking system is used to join two tubes.

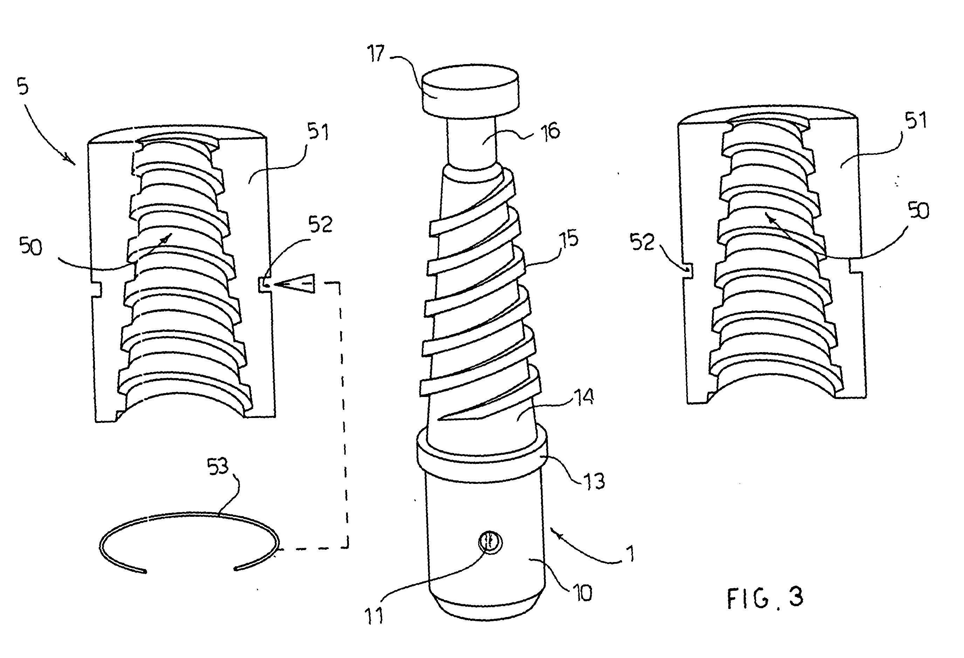

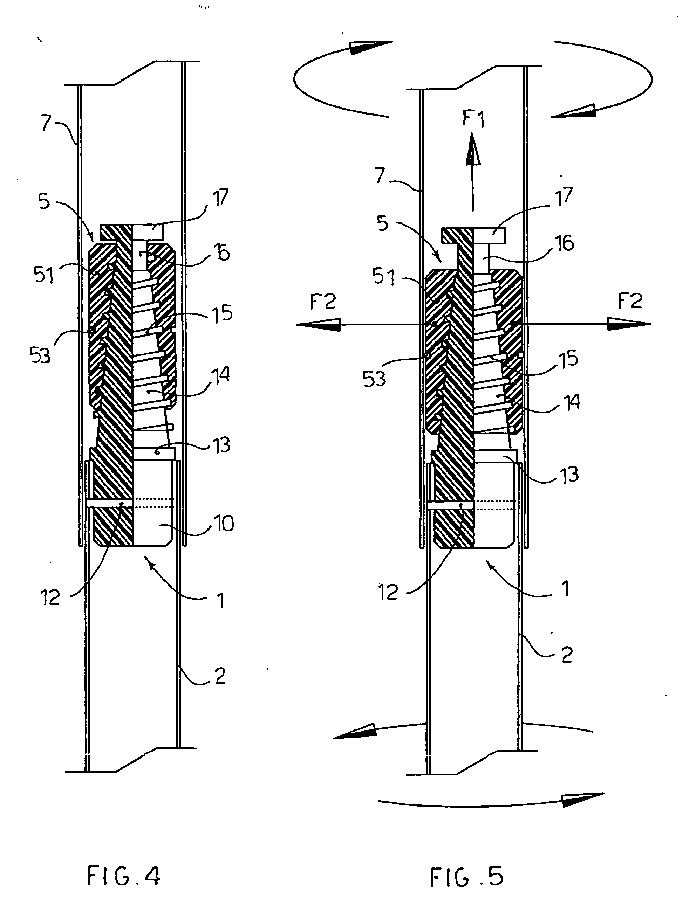

With reference for now to Figures 3 and 4, the tube locking system according to the invention comprises a tang 1 designed to be made integral with the end of a first tube 2. For this purpose the tang 1 comprises a cylindrical bottom portion 10 having a smaller diameter than the inside diameter of the tube 2 in order to couple therein. The cylindrical portion 10 has a radial hole 11 to receive a fixing pin 12, which constrains it to the tube 2. The cylindrical portion 10 ends in a larger diameter abutment collar 13 to abut against the end edge of the tube 2.

Above the collar 13, the tang 1 has a tapered or frusto-conical intermediate portion 14, with a diameter decreasing as the distance from the collar 13 increases. An external frusto-conical thread 15 is formed on the frusto-conical portion 14. That is to say, the ridges of the thread 15 lie along a frusto-conical helix.

The intermediate frusto-conical portion 14 continues with a smaller diameter cylindrical upper portion 16, which ends in a stop element 17 having a cylindrical shape with a larger diameter than the upper portion 16.

The tang 1 is designed to engage inside an expansion mandrel 5 provided with an internal frusto-conical thread 50 matching the external frusto-conical thread 15 of the intermediate portion 14 of the tang 1.

The expansion mandrel 5 comprises two half-shells 51, semi-cylindrical in shape and provided with an internal frusto-conical thread 50, which extends for the whole length of the mandrel 5. Each half-shell 51 has on its outer surface, in an intermediate position, a groove 52 shaped as a semi-circumference, adapted to receive a closing element 53 in the form of an open ring or of a closed ring elastic element.

In this manner, the frusto-conical intermediate portion 15 of the tang 1 is closed between the two half-shells 51, so that the stop element 17 of the tang 1 protrudes upward out of the expansion mandrel 5. Thus the closing element 53 is applied in the grooves 52 of the two half-shells 51 so as to keep them constrained to each other. The mandrel 5 cannot be extracted from the tang 1, thanks to the stop element 17 of the tang, which abuts on the top edge of the mandrel 5.

The tang 1 coupled to the mandrel 5 in a conical threaded coupling relationship, is inserted into a second tube 7 having an inside diameter greater than the outside diameter of the first tube 2. In this manner the first tube 2 can slide telescopically inside the second tube 7 so as to form a pole of the desired length.

Even if the figures show a tang 1 with an external thread 15 that engages in an internal thread 50 of the mandrel, in a like manner the tang 1 can have an internal thread (grooves) which is engaged by an external thread (protrusions) formed in the mandrel 5.

At this point, as shown in Figure 5, the first tube 2 is rotated with respect to the second tube 7. As a result, the tang 1, which is integral with the first tube 2, also rotates.

Consequently the frusto-conical part 14 with the external thread 15 of the tang 1 screws into the internal thread 50 of the mandrel 5 and thus the tang 1 advances axially in the direction of the arrow F1.

The increase in diameter of the frusto-conical part 14 with the external thread 15 causes uniform expansion of the half-shells 51 in the radial direction, in the direction of the arrows F2. As a result the outer surface of the half-shells 51 of the mandrel comes uniformly into contact with the inner surface of the second tube 7, so as to lock the second tube 7 firmly to the mandrel 5 which is integral with the first tube 2.

It should be noted that with the system according to the invention, the whole outer surface of the mandrel 5 comes into contact with the inner surface of the second tube 7. Furthermore the expansion of the mandrel 5 takes place only by means of screwing of the frusto-conical thread 15 of the tang into the frusto-conical thread 50 of the mandrel, without any scraping of the tapered surfaces.

Clearly the mandrel 5, rather than being made in two half-shells 51, can be made in a plurality of portions separated from one another and kept constrained around the tang 1 by means of the closing element 53.

The mandrel 5 is preferably made in a single piece by injection moulding and is then divided into a plurality of longitudinal portions to be mounted around the tang 1.

Alternatively, the mandrel 5 can be made from a cylindrical element with an internal frusto-conical thread in which longitudinal cuts are made which defines respective longitudinal tongues which expand elastically outwards when the frusto-conical part of the tang 1 is screwed into the mandrel. In this case the stop element 17 of the tang will be made integral with the head of the tang, after coupling of the mandrel 5.

In order to improve the grip, the mandrel 5 can be made of two materials: a harder inner material on which the thread 50 is made and a softer outer material to ensure a greater friction with the inner surface of the second tube 7. This can be achieved either by co-moulding or by joining two separate parts.

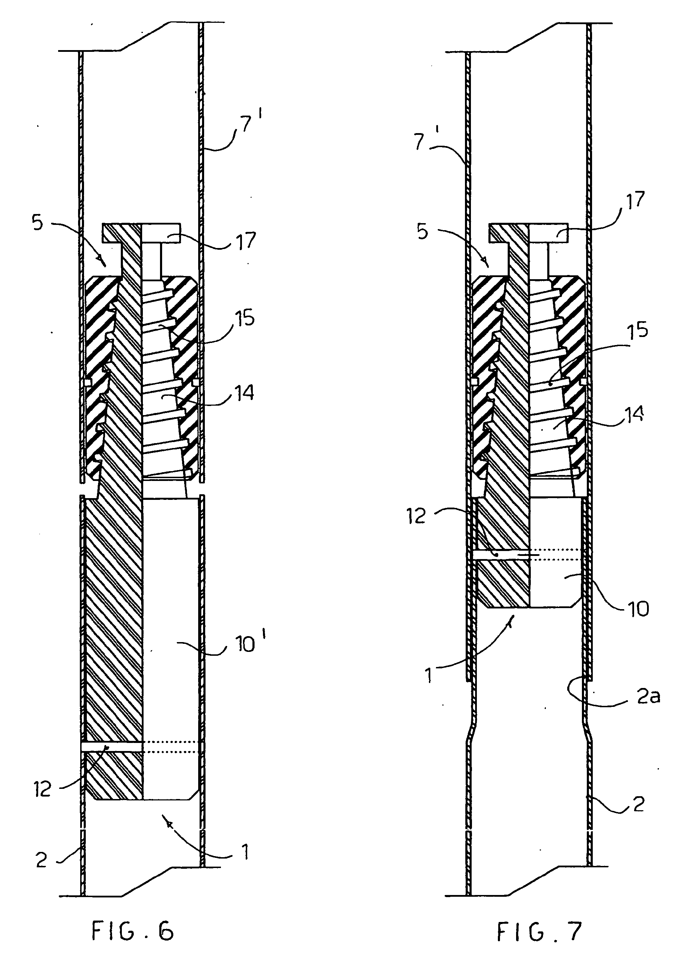

The locking system according to the invention, in addition to telescopic tube length adjustment, can be used, as shown in figure 6, for joining two tubes (2, 7') having the same diameter. In this case, in order to ensure a better strength of the joint, the tang 1 has a cylindrical bottom portion 10' having a greater length than the bottom portion 10 previously described.

Alternatively, to avoid the tang 1 having an excessively long bottom portion, as shown in Figure 7, the first tube 2 can have a smaller diameter end part 2a which integrally receives the tang 1. In this manner the end part 2a of the first tube 2 is inserted inside the second tube 7', so as to ensure a double wall around the bottom part 10 of the tang 1.

In the case of a join between tubes, as shown in Figures 6 and 7, the abutment collar 13 disposed between the cylindrical bottom part 10 and the frusto-conical intermediate part 14 of the tang can be omitted.

Numerous variations and modifications of detail within the reach of a person skilled in the art can be made to the present embodiments of the invention without thereby departing from the scope of the invention as set forth in the appended claims.

## Claims

1. A tube locking system, particularly for trekking, climbing and walking poles and for sticks for orthopaedic and motor rehabilitation use, comprising:
- a tang (1) made integral with one end of a first tube (2),
- an expansion mandrel (5) mounted on said tang (1), able to expand inside a second tube (7; 7') so as to firmly lock the second tube (7; 7') thereon,
said tang (1) and said expansion mandrel (5) being coupled to each other in a threaded conical coupling relationship.
said mandrel (5) comprising at least two portions (51), separated from one another, disposed around the tang (1),
**characterised in that** said at least two portions (51) of the mandrel are held together around the tang (1) by means of a closing element (53) consisting of an elastic ring.

2. A locking system according to claim 1, **characterised in that** said tang (1) comprises a frusto-conical portion (14) provided with an external frusto-conical thread (15), and **in that** said mandrel (5) comprises an internal frusto-conical thread (50) matching the external frusto-conical thread (15) of said tang (1) or vice versa.

3. A locking system according to claim 2, **characterised in that** said internal frusto-conical thread (50) of the mandrel extends for the entire length of the mandrel.

4. A locking system according to claim **1, characterised in that** said closing element (53) is an open ring or a closed ring elastic element that is inserted in respective circumferential grooves (52) formed in the outer surface of the **at least two** portions (51) of mandrel **(5).**

5. A locking system according claim **4, characterised in that** said **at least two** portions (51) of mandrel **(5)** define a substantially cylindrical outside surface.

6. A locking system according to any one of claims 1 to **3, characterised in that** said mandrel **(5)** is made from a cylindrical block having an internal frusto-conical thread and providing a plurality of longitudinal cuts which define a plurality of longitudinal tongues elastically expandable outwards.

7. A locking system according to any one of the preceding claims, **characterised in that** said mandrel (5) comprises a harder inner material to produce the frusto-conical thread (50) and a softer outer material to ensure a greater friction against the inner surface of the second tube (7; 7').

8. A locking system according to any one of the preceding claims, **characterised in that** said tang (1) has a cylindrical bottom portion (10; 10') designed to be inserted into said first tube (2).

9. A locking system according to claim **8, characterised in that** said bottom cylindrical portion (10; 10') of the tang has a radial hole (11) designed to receive a fixing pin (12) to constrain it to the first tube (2).

10. A locking system according to claim **8** or **9, characterised in that** between said bottom cylindrical portion (10) and said frusto-conical portion (14) of the tang there is provided an abutment collar (13) designed to abut against the end edge of the first tube (2).

11. A locking system according to any one of the preceding claims, **characterised in that** said tang (1) has in its top end a stop element (17) which protrudes outward from the mandrel (5) to prevent axial extraction of the mandrel (5) from the tang (1).

12. A locking system according to any one of the preceding claims, **characterised in that** said first tube (2) slides telescopically inside said second tube (7).

13. A locking system according to any one of claims 1-**11**, **characterised in that** said first tube (2) and said second tube (7') have substantially the same diameter.

14. A trekking pole **characterised in that** it comprises a locking system according to any one of claims 1-**11**.

## Patentansprüche

1. Rohrverriegelungssystem, insbesondere für Trecking-, Kletter- und Wanderstöcke und für Stöcke zur Verwendung in der orthopädischen Rehabilitation und Bewegungstherapie, umfassend:
- einen Zylinderschaft (1), der einstückig mit einem Ende eines ersten Rohres (2) ausgebildet ist;
- einen Spanndom (5), der an dem Zylinderschaft (1) montiert ist und dazu imstande ist, sich im Inneren eines zweiten Rohres (7, 7') auszudehnen, so dass das zweite Rohr (7, 7') fest an diesem verriegelt wird,
wobei der Zylinderschaft (1) und der Spanndom (5) in einem gewindeförmigen, konischen Kopplungsverhältnis aneinander gekoppelt sind;
wobei der Dom (5) mindestens zwei Abschnitte (51) umfasst, die voneinander getrennt um den Zylinderschaft (1) angeordnet sind,
**dadurch gekennzeichnet, dass** die mindestens zwei Abschnitte (51) des Doms um den Zylinderschaft (1) mit Hilfe eines Verschlusselementes (53) gehalten werden, das aus einem elastischen Ring besteht.

2. Verriegelungssystem nach Anspruch 1, **dadurch gekennzeichnet, dass** der Zylinderschaft (1) einen kegelstumpfen Abschnitt (14) umfasst, der mit einem äußeren kegelstumpfen Gewinde (15) bereitgestellt ist, und dass der Dom (5) eine inneres kegelstumpfes Gewinde (50) umfasst, das zu dem äußeren kegelstumpfen Gewinde (15) des Zylinderschaftes (1) passt, oder umgekehrt.

3. Verriegelungssystem nach Anspruch 2, **dadurch gekennzeichnet, dass** das innere kegelstumpfe Gewinde (50) des Doms sich über die gesamte Länge des Doms erstreckt.

4. Verriegelungssystem nach Anspruch 1, **dadurch gekennzeichnet, dass** das Verschlusselement (53) ein offenes ringförmiges oder ein geschlossenes ringförmiges elastisches Element ist, das in entsprechende Umfangsrillen (52) eingesetzt wird, die in der Außenfläche der mindestens zwei Abschnitte (51) des Doms (5) gebildet sind.

5. Verriegelungssystem nach Anspruch 4, **dadurch gekennzeichnet, dass** die mindestens zwei Abschnitte (51) des Doms (5) eine im Wesentlichen zylindrische Außenfläche definieren.

6. Verriegelungssystem nach einem der Ansprüche 1 bis 3, **dadurch gekennzeichnet, dass** der Dom (5) aus einem zylindrischen Block mit einem inneren kegelstumpfen Gewinde besteht und mehrere längliche Schnitte bereitstellt, die mehrere längliche Zungen bilden, die elastisch nach außen ausdehnbar sind.

7. Verriegelungssystem nach einem der vorangehenden Ansprüche, **dadurch gekennzeichnet, dass** der Dom (5) ein härteres inneres Material umfasst, um das kegelstumpfe Gewinde (50) zu bilden, und ein weicheres äußeres Material, um eine höhere Reibung gegen die Innenfläche des zweiten Rohres (7; 7') sicherzustellen.

8. Verriegelungssystem nach einem der vorangehenden Ansprüche, **dadurch gekennzeichnet, dass** der Zylinderschaft (1) einen zylindrischen Bodenabschnitt (10; 10') aufweist, der zum Einsetzen in das erste Rohr (2) gestaltet ist.

9. Verriegelungssystem nach Anspruch 8, **dadurch gekennzeichnet, dass** der zylindrische Bodenabschnitt (10; 10') des Zylinderschaftes ein radiales Loch (11) aufweist, das zur Aufnahme eines Befestigungsstifts (12) gestaltet ist, um diesen auf das erste Rohr (2) zu spannen.

10. Verriegelungssystem nach Anspruch 8 oder 9, **dadurch gekennzeichnet, dass** zwischen dem zylindrischen Bodenabschnitt (10) und dem kegelstumpfen Abschnitt (14) des Zylinderschaftes ein Auflagekranz (13) bereitgestellt ist, der zur Auflage gegen die Endkante des ersten Rohres (2) gestaltet ist.

11. Verriegelungssystem nach einem der vorangehenden Ansprüche, **dadurch gekennzeichnet, dass** der Zylinderschaft (1) an seinem oberen Ende ein Stoppelement (17) aufweist, das von dem Dom (5) nach außen ragt, um ein axiales Herausziehen des Doms (5) aus dem Zylinderschaft (1) zu verhindern.

12. Verriegelungssystem nach einem der vorangehenden Ansprüche, **dadurch gekennzeichnet, dass** das erste Rohr (2) teleskopisch im Inneren des zweiten Rohres (7) gleitet.

13. Verriegelungssystem nach einem der Ansprüche 1 bis 11, **dadurch gekennzeichnet, dass** das erste Rohr (2) und das zweite Rohr (7') im Wesentlichen denselben Durchmesser haben.

14. Treckingstock, **dadurch gekennzeichnet, dass** er ein Verriegelungssystem nach einem der Ansprüche 1 bis 11 umfasst.

## Revendications

1. Système de verrouillage de tubes, particulièrement pour les bâtons de randonnée, d'alpinisme et de marche et pour les cannes à usage orthopédique et de réhabilitation motrice, comprenant :
- une pointe (1) faisant partie intégrale d'une extrémité d'un premier tube (2),
- un mandrin d'expansion (5) monté sur ladite pointe (1), apte à s'étendre à l'intérieur d'un deuxième tube (7 ; 7') de manière à verrouiller fermement le deuxième tube (7 ; 7') sur celui-ci,
ladite pointe (1) et ledit mandrin d'expansion (5) étant couplés l'un à l'autre dans une relation de couplage conique fileté,
ledit mandrin (5) comprenant au moins deux portions (51), séparées l'une de l'autre, disposées autour de la pointe (1),
**caractérisé en ce que** lesdites au moins deux portions (51) du mandrin sont maintenues ensemble autour de la pointe (1) au moyen d'un élément de fermeture (53) se composant d'un anneau élastique.

2. Système de verrouillage selon la revendication 1, **caractérisé en ce que** ladite pointe (1) comprend une portion frusto-conique (14) munie d'un filetage frusto-conique externe (15), et **en ce que** ledit mandrin (5) comprend un filetage frusto-conique interne (50) correspondant au filetage frusto-conique externe (15) de ladite pointe (1) ou vice versa.

3. Système de verrouillage selon la revendication 2, **caractérisé en ce que** ledit filetage frusto-conique interne (50) du mandrin s'étend sur toute la longueur du mandrin.

4. Système de verrouillage selon la revendication 1, **caractérisé en ce que** ledit élément de fermeture (53) est un élément élastique d'anneau ouvert ou d'anneau fermé qui est inséré dans des gorges circonférentielles respectives (52) formées dans la surface extérieure des au moins deux portions (51) du mandrin (5).

5. Système de verrouillage selon la revendication 4, **caractérisé en ce que** lesdites au moins deux portions (51) du mandrin (5) définissent une surface extérieure sensiblement cylindrique.

6. Système de verrouillage selon l'une quelconque des revendications 1 à 3, **caractérisé en ce que** ledit mandrin (5) est constitué d'un bloc cylindrique ayant un filetage frusto-conique interne et fournissant une pluralité de coupures longitudinales qui définissent une pluralité de langues longitudinales extensibles élastiquement vers l'extérieur.

7. Système de verrouillage selon l'une quelconque des revendications précédentes, **caractérisé en ce que** ledit mandrin (5) comprend un matériau intérieur plus dur pour produire le filetage frusto-conique (50) et un matériau extérieur plus souple pour assurer un plus grand frottement contre la surface intérieure du deuxième tube (7 ; 7').

8. Système de verrouillage selon l'une quelconque des revendications précédentes, **caractérisé en ce que** ladite pointe (1) a une portion inférieure cylindrique (10 ; 10') conçue pour être insérée dans ledit premier tube (2).

9. Système de verrouillage selon la revendication 8, **caractérisé en ce que** ladite portion cylindrique inférieure (10 ; 10') de la pointe a un trou radial (11) conçu pour recevoir une broche de fixation (12) pour la contraindre sur le premier tube (2).

10. Système de verrouillage selon la revendication 8 ou 9, **caractérisé en ce qu'**entre ladite portion cylindrique inférieure (10) et ladite portion frusto-conique (14) de la pointe il est fourni un collier d'aboutement (13) conçu pour s'abouter contre le bord d'extrémité du premier tube (2).

11. Système de verrouillage selon l'une quelconque des revendications précédentes, **caractérisé en ce que** ladite pointe (1) a à son extrémité supérieure un élément de butée (17) qui fait saillie vers l'extérieur à partir du mandrin (5) pour empêcher l'extraction axiale du mandrin (5) de la pointe (1).

12. Système de verrouillage selon l'une quelconque des revendications précédentes, **caractérisé en ce que** ledit premier tube (2) coulisse de manière télescopique à l'intérieur dudit deuxième tube (7).

13. Système de verrouillage selon l'une quelconque des revendications 1 à 11, **caractérisé en ce que** ledit premier tube (2) et ledit deuxième tube (7') ont sensiblement le même diamètre.

14. Bâton de randonnée **caractérisé en ce qu'**il comprend un système de verrouillage selon l'une quelconque des revendications 1 à 11.
